# EUROPÄISCHE PATENTSCHRIFT

(11) **EP 3 177 853 B1**
(45) Veröffentlichungstag und Bekanntmachung des Hinweises auf die Patenterteilung: **05.01.2022**
(21) Anmeldenummer: 15748230.8
(22) Anmeldetag: 06.08.2015
(51) Int. Cl.: F16G 3/00, B29C 65/48, F16G 3/10, F16G 3/16

(54) **DOPPELT WIRKENDER ANROLLER**
DOUBLE-ACTING ROLLER
ROULEAU À DOUBLE EFFET

(30) Priorität: 08.08.2014 DE 102014215789
(43) Veröffentlichungstag der Anmeldung: 14.06.2017
(73) Patentinhaber: Rema Tip Top AG, 85586 Poing (DE)
(72) Erfinder: STOLP, Eckhard, 85521 Riemerling (DE); KÄSTNER, Jens-Uwe, 03130 Spremberg (DE)
(74) Vertreter: MERH-IP Matias Erny Reichl Hoffmann Patentanwälte PartG mbB
(86) Internationale Anmeldenummer: PCT/EP2015/068139
(87) Internationale Veröffentlichungsnummer: WO 2016/020470

(56) Entgegenhaltungen:
- EP-A1- 0 009 015
- EP-A2- 0 406 223
- DE-U1- 9 317 104
- DE-U1-202012 010 694
- FR-A1- 2 571 304
- FR-A1- 2 572 997
- US-A- 4 447 288

## Beschreibung

Die vorliegende Erfindung betrifft einen Anroller zur Druckerzeugung beim Verbinden von Gegenständen auf Polymerbasis. Solche Gegenstände auf Polymerbasis sind insbesondere Fördergurte mit Gewebelagen wobei der für die Kaltverbindung der Fördergurte nötige Anpressdruck mit einem Anroller erzeugt wird. Durch die Verwendung des Anrollers für den Kaltverbindungsprozess wird eine optimale Haftung der Verbindungsflächen bewirkt.

In der Druckschrift DE 1194 567 B ist ein Anroller zum Andrücken für die Reparatur oder Verbindung von plattenförmigen Gummigegenständen gezeigt. Der Anroller besteht dabei aus zwei langen Hebeln mit Handhaben, die eine Zange bilden und am Maulende Andrückteile aufweisen. Durch das Zusammendrücken der Hebel wird über die Andrückteile eine Kraft auf den Abschlussflicken, welcher über die zu reparierende Schadstelle gelegt wird, aufgebracht. Durch die stattfindende Kaltvulkanisation werden die Gummiteile miteinander verbunden.

In der EP 2 664 448 A1 ist ein Gerät zum Verbinden von Gummielementen gezeigt. Dabei werden Endbereiche von plattenartigen Gummiteilen zur Verbindung miteinander in Berührung gebracht. Das Gerät zum Verbinden der Gummiteile umfasst dabei ein Paar Positionierungsrollen, eine Pressrolle, und ein Paar Verbindungsrollen, welche die Endbereiche der Gummiteile umschließen und von den Positionierungsrollen geführt werden.

Die DE 9317104 U1 betrifft eine Vorrichtung zum überlappenden Verschweißen von Folienrändern mit Heizflächen zur Erhitzung der Folienränder im Deponiebau.

Die EP 0406223 A2 betrifft eine Vorrichtung zum Verschweißen einander randseitig überlappender Folien aus Kunststoff mit einem gegen den Spalt zwischen Schweißrollen gerichteten keilförmigen Heizkörper, wobei der keilförmige Heizkörper an einem Träger angeordnet ist, der auf einer an einem Grundkörper der Vorrichtung befestigten Führung verschiebbar geführt ist.

Die US 4447288 A betrifft eine Nahtschweißmaschine zum thermischen Falzen von beschichteten Gewebeplatten mit einer Heißluftschweißpistole.

Die EP 0009015 A1 betrifft eine Schweißvorrichtung in Form eines Handgerätes für Bahnen oder Platten aus thermoplastischem Kunststoff, bestehend aus einer Anpreßvorrichtung mit einer unter Federdruck stehenden Rolle, welche an einer im Querschnitt S-förmigen, gegebenenfalls mit Rädern oder Laufrollen ausgestatteten Halte- und Führungsvorrichtung schwenkbar gelagert ist, wobei ein keilförmiger Heizkörper vor der Druckrolle auf der Halte- und Führungsvorrichtung angebracht ist.

Die FR 2571304 A1 betrifft einen Siegelapparat für Kunststoffplatten.

Die FR 2572997 A1 betrifft eine Schweißvorrichtung für Kunststoffplatten.

Die DE 20 2012 010 694 U1 betrifft ein mobiles Fügegerät, insbesondere zum Verschweißen von zwei Enden eines Förderbandes, wobei dieses so ausgebildet und angeordnet ist, dass es die zwei Enden des Förderbands innerhalb von zwei Kanten des Förderbands miteinander durch zumindest eine, vorzugsweise über die gesamte Breite des Förderbandes erstreckende Schweißnaht verbindet. Das Fügegerät weist zwei Arme auf, die über ein Verbindungsstück miteinander verbunden sind und jeweils ein Anrollteil umfassen, wobei die Anrollteile mit ihren Wirkungsflächen gegenüberliegend zueinander angeordnet sind. Das Fügegerät weist eine auf die Arme drückende Presseinrichtung auf, wobei ein Anrollteil für eine Fortbewegung des Anrollers über eine Verbindungsfläche der zu verbindenden Fördergurte über einen Antrieb angetrieben wird, und das angetriebene Anrollteil eine an einem der Arme gelagerte angetriebene Rolle ist.

Eine Aufgabe der Erfindung ist es die Handhabung des Anrollers zu vereinfachen. Die Aufgabe wird durch die Merkmale des unabhängigen Patentanspruchs gelöst. Die abhängigen Ansprüche betreffen vorteilhafte Ausführungsformen der Erfindung.

Der erfindungsgemäße Anroller umfasst zwei Arme, die über ein Verbindungsstück miteinander verbunden sind und jeweils ein Anrollteil. Die Anrollteile sind dabei mit ihren Wirkungsflächen gegenüberliegend zueinander angeordnet. Der Anroller umfasst zudem eine Presseinrichtung, welche auf die Arme drückt. Ein Anrollteil ist für eine Bewegung relativ zu den Gegenständen über einen Antrieb angetrieben. Dadurch wird die gesamte Klebefläche mit einem gleichmäßigen Druck angerollt. Der Anroller kann zudem mit einer einstellbaren Geschwindigkeit gleichmäßig über die Fläche bewegt werden, wodurch eine gute Haftung der Verklebeflächen erreicht wird. Die eingebrachte Anpresskraft wird gleichmäßig in den Verbindungsbereich eingebracht. Der Anroller lässt sich zudem leicht über die Oberfläche der zu verbindenden Gegenstände bewegen und eine gleichmäßige Bewegungsgeschwindigkeit wird sichergestellt. Der Anroller kann auch über den Rand der Verbindungsgegenstände hinaus und zurück bewegt werden, ohne dabei den Anrollvorgang unterbrechen zu müssen.

Erfindungsgemäß ist das angetriebene Anrollteil als eine beweglich am Arm gelagerte angetriebene Rolle ausgebildet. Durch die Verwendung einer Rolle als Anrollteil kann der Druck in den Verbindungsflächen besonders gleichmäßig verteilt werden und eine Positionierung des Anrollers auf den Verbindungsflächen kann besonders leicht erreicht werden. Zudem erfordert die Verwendung einer Rolle einen verminderten Kraftaufwand zum Bewegen des Anrollers über die Verbindungsflächen.

Erfindungsgemäß ist die Wirkungsfläche der angetriebenen Rolle zur Erhöhung der Reibung als eine ein aufgerautes Oberflächenprofil aufweisende Lauffläche ausgebildet.

Dadurch wird es möglich, auch über sehr glatte Oberflächen einen gleichmäßigen Anrollvorgang durchzuführen. Zudem ist es möglich, auch Verbindungsflächen anzurollen, auf deren Oberflächen sich haftungsvermindernde Substanzen oder Schichten befinden. Insbesondere wird durch das aufgeraute Oberflächenprofil ein Durchdrehen der angetriebenen Rolle verhindert, so dass eine gleichmäßige Bewegung gewährleistet wird.

Die angetriebene Rolle kann den Anroller über eine Fläche der zu verbindenden Gegenstände auf Polymerbasis bewegen. Somit kann der Anroller auch gleichmäßig über große Verbindungsflächen der Verbindungsgegenstände bewegt werden, und es werden somit nicht nur die Rollen, sondern der gesamte Anroller bewegt.

Die zu verbindenden Gegenstände auf Polymerbasis können Gurte mit einer Deckschicht aus Kautschuk sein. Insbesondere für Gurte mit einer Deckschicht aus Kautschuk bietet sich die Verwendung des erfindungsgemäßen Anrollers zur Erzeugung einer Verbindung an.

Die Bewegung der angetriebenen Rolle kann über eine Steuerung kontrolliert werden. Durch die Steuerung der Bewegung und insbesondere der Drehgeschwindigkeit der angetriebenen Rolle kann eine gewünschte Geschwindigkeit bzw. Anrollgeschwindigkeit über die Verbindungsflächen eingestellt werden. Abhängig von der Dicke der Verbindungsflächen und den verwendeten Klebstoffen ist somit eine individuelle einstellbare Anrollcharakteristik des Anrollers möglich.

Bei einer vorteilhaften Ausgestaltung des erfindungsgemäßen Anrollers, kann der Antrieb als elektrischer Antrieb ausgebildet sein. Bei Verwendung eines elektrischen Antriebs als Antrieb für die angetriebene Rolle bzw. Anrollteil ist eine besonders kompakte als auch genaue Ansteuerung der angetriebenen Rolle möglich. Zudem ist es dadurch möglich, den Antrieb in unmittelbarer Nähe des angetriebenen Anrollteils zu positionieren und somit lange Kraftübertragungswege zu vermeiden.

Der Anroller ist als tragbares Werkzeug ausgestaltet. Dies hat den besonderen Vorteil, dass der Anroller nicht nur in der Werkstatt, sondern auch vor Ort im Kraftwerk oder auf der Baustelle eingesetzt werden kann.

Die Presseinrichtung kann eine einstellbare Druckschraube und/oder eine Druckanzeige und/oder einen Druckmesser umfassen. Da über die Presseinrichtung der Druck auf die Verbindungsflächen eingestellt wird, ist die Verwendung einer einstellbaren Druckschraube vorteilhaft, da man mit einem Drehmomentschlüssel in einfacher Weise den gewünschten Anpressdruck einstellen kann. Über eine Druckanzeige und einen Druckmesser ist es möglich, dem Benutzer des Anrollers während des Anrollvorgangs den Anrolldruck anzuzeigen, so dass dieser ständig über den aufgebrachten Druck informiert ist, so dass die Güte der Verbindung erhöht werden kann, da bei zu niedrigem Druck der Benutzer sofort den Druck der Presseinrichtung entsprechend nachstellen kann.

Der Druck der Presseinrichtung kann über den Antrieb eingestellt werden. Der Antrieb kann somit nicht nur das angetriebene Anrollteil ansteuern, sondern auch den Druck für die Presseinrichtung aufbringen, so dass der Antrieb gleichzeitig zwei Funktionen übernehmen kann und eine händische Einstellung des Drucks der Presseinrichtung nicht mehr nötig ist. Der Druck kann somit weitgehend unabhängig vom Benutzer schnell und genau in einfacher Weise eingestellt werden.

Die Steuerung kann einen Joystick und/oder einen Schalter zur Steuerung des angetriebenen Anrollteils umfassen. Durch die Steuerung des Anrollteils über einen Joystick lässt sich in einfacher Weise eine genaue Ansteuerung, welche vom Benutzer einfach zu handhaben ist, realisieren. Da der Joystick, anders als ein bloßer Ein- und Ausschalter, auch feinere Justierungen zulässt, lässt sich auch die Geschwindigkeit des Anrollers fein einstellen.

Der Antrieb kann über ein Getriebe mit dem angetriebenen Anrollteil in einer Wirkverbindung stehen. Um den verwendeten Antrieb auf die für den Anrollvorgang notwendige relativ geringe Geschwindigkeit zu bringen, ist die Verwendung eines Getriebes vorteilhaft. Dadurch kann auch ein hochdrehender Motor verwendet werden. Zudem ist mit Hilfe des Getriebes auch eine flexiblere Anbringung des Motors möglich.

Sowohl der Antrieb als auch das angetriebene Anrollteil kann im Bereich des freien Endes des Arms befestigt sein. Besonders vorteilhaft ist die Anbringung des Antriebs und des angetriebenen Anrollteils am freien Ende des Arms, um so die Anrollreichweite des vorhandenen Anrollers zu erhöhen.

Der Antrieb kann ein Schrittmotor sein. Bei Verwendung eines Schrittmotors als Antrieb lässt sich eine besonders feine Justierung der Geschwindigkeit des Anrollers einstellen.

Vorteilhafte Ausgestaltungen und weitere Details der vorliegenden Erfindung werden im Folgenden mit Bezug auf schematische Figuren beschrieben. In den schematischen Zeichnungen wird die Erfindung näher erläutert.

### Kurze Beschreibung der Zeichnungen

- Figur 1:: zeigt eine perspektivische Ansicht des erfindungsgemäßen Anrollers.
- Figur 2:: zeigt das Maul des Anrollers mit den Anrollteilen und den Antrieb.
- Figur 3:: ist eine weitere Ansicht auf das Maul des Anrollers, wobei auch Teile der Pressvorrichtung sichtbar sind.
- Figur 4:: zeigt eine Ansicht des Verbindungsstücks des Anrollers.

### Detaillierte Beschreibung von Ausführungsbeispielen

Der erfindungsgemäße Anroller kann insbesondere für den Kaltverbindungsprozess von Fördergurten eingesetzt werden. Beim Kaltverbinden von Gummifördergurten mit Gewebelagen wird zunächst der Fördergurt gereinigt. Insbesondere wasserlösliche Verschmutzungen müssen abgeschabt werden und mit Wasser weggespült und anschließend getrocknet werden. Öl- und fetthaltige Verschmutzungen müssen mit speziell dafür vorgesehenen Reinigungsmitteln entfernt werden.

Nach dem Reinigen des Fördergurts kann die eigentliche Herstellung der Gurtverbindung durchgeführt werden. Für mehrlagige Fördergurte mit Deckplatten auf Polymerbasis bietet sich dabei eine Überlappungs- und Stufenverbindung an. Dazu wird der Gurt auf dem Arbeitstisch platziert und die freien Gurtenden mit Gurtspannern gesichert. Für die Herstellung einer Endlosverbindung sind die Gurtenden zusammenzuziehen, bis der Gurt gespannt auf dem Arbeitstisch liegt. Die Gurtenden sind exakt in Gurtlängsrichtung so auszurichten, und zueinander zu positionieren, dass sie sich mindestens um das Maß der Verbindungslänge plus einer Abschrägung auf dem Arbeitstisch überlappen. Danach wird am Gurtoberteil als auch am Gurtunterteil ein Schrägschnitt eingebracht (zum Beispiel mit einem schräg gehaltenen Kneippmesser). Die Gewebelagen sind dabei nicht zu verletzen. Die Gummidecken werden anschließend abgezogen. Im nächsten Schritt werden mit einem Lagenritzmesser Teile der Gummidecke entfernt und die oberste Gewebelage eingeritzt und mit der Kneifzange oder Greifzange abgezogen. Weitere Gewebelagen werden jeweils entsprechend der jeweiligen Stufenlängen eingeritzt und abgezogen. Sobald beide Gurtenden eine solche Abstufung aufweisen, werden die Gurtenden zusammengelegt, so dass die Stöße und Gewebeabstufungen genauestens aufeinander passen, bzw. so dass die Kanten der beiden Gurte genau fluchten.

Die Herstellung der Verbindung erfolgt zunächst durch Aufrauen der Oberflächen der Gummikanten mit einem Rauwerkzeug, zum Beispiel einer Drahtrundbürste. Dies geschieht auf beiden Gurtenden. Im nächsten Schritt wird die benötigte Menge Klebstoff mit Härter gründlich gemischt. Innerhalb der Topfzeit werden die Verbindungsflächen mit dem Klebstoff-Härter-Gemisch eingestrichen. Nach entsprechender Trocknungszeit des Einstrichs werden das Gurtoberteil und das Gurtunterteil genau fluchtend ohne Lufteinschluss übereinander gelegt. Die Verbindungsflächen müssen dabei exakt zueinander passen. Danach wird mit dem erfindungsgemäßen Anroller die gesamte Verbindung von innen nach außen angepresst bzw. angerollt. Zuerst wird dabei mit leicht, dann mit fest angezogener Stellschraube die Verbindung mehrmals von der Verbindungsmitte nach außen angerollt. Zuletzt wird noch die Stoßlücke mit einem Stoßlückenband verschlossen.

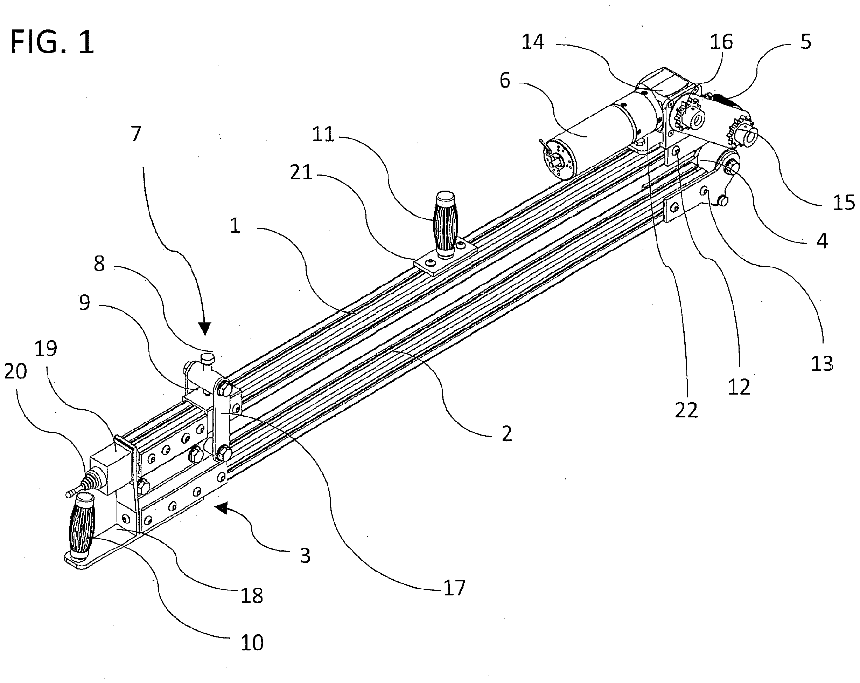

In Figur 1 ist eine perspektivische Ansicht des Anrollers gezeigt. Der gezeigte Anroller besteht aus einem oberen Arm 1, einem unteren Arm 2 und einem Verbindungsstück 3. Die zwei Arme und das Verbindungsstück bilden gemeinsam eine Zange, die an einem Ende ein offenes Maul aufweist. An den freien Enden des oberen Arms 1 und des unteren Arms 2 sind die Rollen angeordnet.

In Figur 1 weist der obere Arm 1 eine obere Rolle 5 auf und der untere Arm 2 weist eine untere Rolle 4 auf. Die Rollen sind über die Rollenaufnahmen mit den Armen verbunden. Zwischen die Rollen werden die zu verbindenden Gummistücke durchgeführt. Diese Gummistücke sind zum Beispiel ein- oder mehrlagige Fördergurte mit textilen Zuträgern und Deckplatten auf Polymerbasis. Die verwendete Polymerbasis ist dabei zum Beispiel Naturkautschuk, Styrolbutadien-Kautschuk, Isopren-Kautschuk, Butadien-Kautschuk, Chloropren-Kautschuk, oder deren Verschnitte (DIN ISO 1629).

Zur leichteren Handhabung des Anrollers weist dieser einen ersten Griff 10 und einen zweiten Griff 11 auf, welche über die erste Griffbefestigung 18 und die zweite Griffbefestigung 21 an der jeweiligen Fixierung mit dem Arm verbunden sind. Am freien Ende des oberen Arms 1 ist ein Antrieb 6 über ein Getriebe 14 bzw. ein Umlenkgetriebe mit der oberen Rolle 5 in Wirkverbindung. In der in Figur 1 gezeigten Ausführungsform erfolgt die Verbindung des Antriebs 6 mit der oberen Rolle 5 über ein erstes Zahnrad 16 und ein zweites Zahnrad 15, welche durch eine Kette miteinander in Wirkverbindung stehen. Der gezeigte Antrieb 6 ist ein Elektromotor, zum Beispiel ein Schrittmotor, mit dem die Drehgeschwindigkeit der oberen Rolle nach Bedarf eingestellt bzw. gesteuert werden kann. Durch die Steuerung der Drehgeschwindigkeit der oberen Rolle 5 wird gleichzeitig auch die Fortbewegung des gesamten Anrollers über die Verbindungsfläche eingestellt. Dadurch wird es dem Benutzer des erfindungsgemäßen Anrollers ermöglicht, eine gleichmäßige kontrollierte Bewegung über die Verbindungsfläche durchzuführen. Durch die elektrische Ansteuerung der oberen Rolle 5 ist es zudem möglich, bei Überschreiten des Anrollers über den Rand der Verbindungsflächen der Gummigegenstände hinaus, den Anroller auf die Verbindungsflächen zurückzuführen, ohne dabei die Presseinrichtung neu justieren zu müssen. Bei Verwendung eines Anrollers ohne elektrischen Antrieb ist dieses sogenannte Wiederhineinfahren in die Verbindungsstelle ohne Rückstellung der Pressvorrichtung bzw. der Presskraft nicht möglich, da dies einen zu großen Kraftaufwand für den Benutzer erfordern würde.

Je breiter die Verbindungsfläche der Fördergurte, umso länger müssen auch die Arme ausgestaltet sein. Dies führt dazu, dass bei besonders breiten Verbindungen eine Handhabung mit elektrischen Antrieb 6 immer vorteilhafter wird. Bei der Herstellung der Verbindung zweier Gurtenden wird nach dem Zusammenlegen der mit Klebstoff eingestrichenen Gurtenden die Verbindung mit dem doppelt wirkenden Anroller von der Mitte nach außen gleichmäßig an jeder Stelle angerollt. Die Abmessung der Verbindungsfläche hängt dabei von der Festigkeit des Fördergurts ab. Je höher die Festigkeit, desto größer ist die Verbindungfläche. Durch das Anrollen wird der benötigte Druck auf die Klebestellen aufgebracht, da der Kontaktklebstoff zur optimalen Haftung kurzzeitig mit hohem Druck beaufschlagt werden muss. Insbesondere bei besonders breiten Gurtverbindungen und somit Verbindungsflächen ist es für den Benutzer besonders schwierig, gleichmäßig mit hohem Druck die Verbindung anzurollen. Dadurch schwankt die Güte der Verbindung von Benutzer zu Benutzer stark. Durch die Verwendung des erfindungsgemäßen Anrollers ist die Güte der Verbindung höher da der nötige Kraftaufwand des Benutzers reduziert wird. Zur Erzeugung des Drucks auf die Rollen wird ein Druck auf die Arme, den oberen Arm 1 und den unteren Arm 2, erzeugt. Dies geschieht durch die Presseinrichtung 7. Die erfindungsgemäße Presseinrichtung 7 umfasst eine Druckschraube 8, welche über zum Beispiel einen Drehmomentschlüssel angezogen werden kann und dadurch einen Druck auf das Gegenstück der Druckschraube 9 ausübt und somit -die Arme, den oberen Arm 1 und den unteren Arm 2, aneinander presst. Die Druckschraube 8 ist in einem Gewinde, insbesondere mit einem Feingewinde, in einem Rohrstück über eine Schraube an zwei Zugelementen fixiert, welche wiederum an der gegenüberliegenden Seite mit dem Verbindungsstück 3 über Schrauben in Verbindung stehen. Durch diese Ausgestaltung der Presseinrichtung wird eine einfache und effektive Aufbringung des Drucks zwischen dem oberen Arm 1 und dem unteren Arm 2 möglich, ohne dabei das Gewicht des Anrollers, welcher als tragbares Werkzeug ausgestaltet sein kann, übermäßig zu erhöhen.

Das Verbindungsstück 3 stellt eine starre Verbindung zwischen dem oberen Arm 1 und dem unteren Arm 2 her. An der Benutzer-zugewandten Seite der Arme bzw. des Anrollers befinden sich die Steuerung 19 und das Eingabegerät 20. Das Eingabegerät kann zum Beispiel ein Schalter oder auch ein Joystick sein. Mit Hilfe eines Joysticks lässt sich der Anroller noch präziser über die Verbindungsfläche steuern. Zudem befindet sich in der Nähe des ersten Griffs 10 gleichzeitig auch das Eingabegerät 20, so dass die Schaltwege für den Benutzer gering gehalten werden und die Steuerung des Anrollers erleichtert wird.

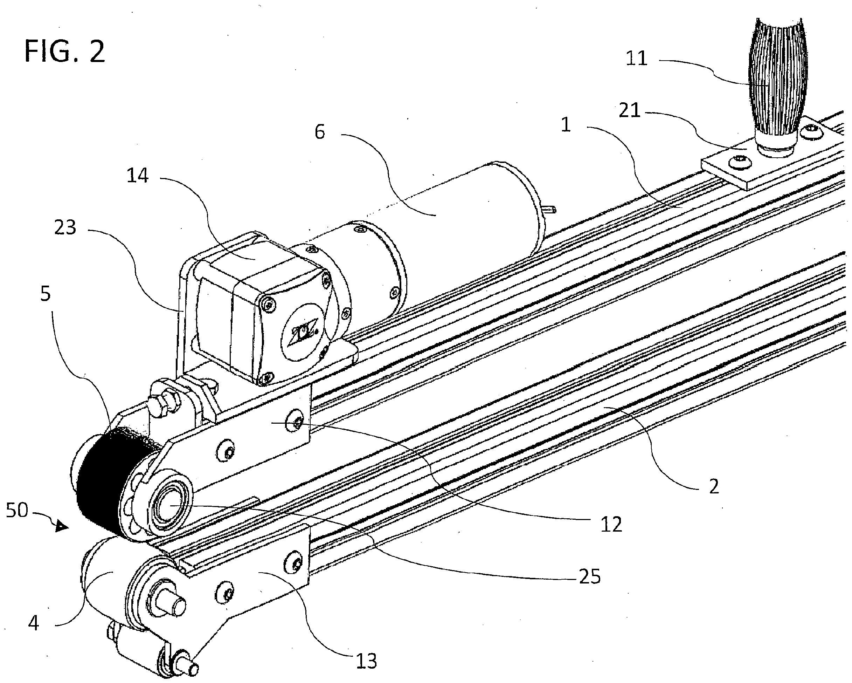

In Figur 2 ist das Maul des Anrollers bzw. die freien Enden der Arme gezeigt. Die obere Rolle 5 weist eine aufgeraute Oberfläche auf. Diese Oberfläche kann zum Beispiel durch Riefen oder Rillen aufgeraut sein, so dass ein Durchrutschen der oberen Rolle 5 auf den zu verbindenden Gegenständen vermieden wird. Die obere Rolle ist über zwei Lager an der oberen Rollenaufnahme 12 gelagert. Die obere Rollenaufnahme 12 ist zudem über Schraubverbindungen mit dem oberen Arm 1 fixiert. Die obere Rolle 5 ist zudem auf eine Welle 25 der oberen Rolle 5 aufgebracht, welche wiederum mit dem Zahnrad und mit dem Kettentrieb und in weiterer Folge mit dem Elektromotor bzw. Antrieb 6 in Verbindung steht. Der Antrieb 6 und das Getriebe 14 sind über eine Antriebsaufnahme 23 am oberen Arm fixiert. Zudem ist die Antriebsaufnahme 23 auch direkt mit der oberen Rollenaufnahme fixiert, so dass eine möglichst spielfreie Kraftübertragung auf die obere Rolle 5 möglich ist.

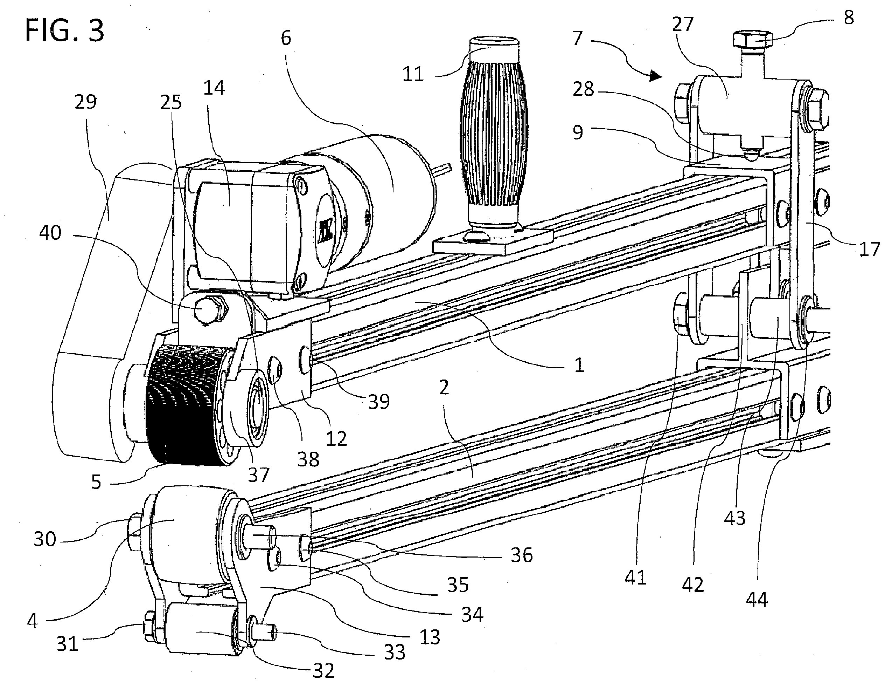

In Figur 3 ist nochmals eine Ansicht auf die Anordnung der oberen und unteren Rolle als auch eine Ansicht auf die Presseinrichtung 7 gezeigt.

Die Antriebskraft wird dabei vom Antrieb 6 über ein Umlenkgetriebe 14, welches auch eine Übersetzung oder Untersetzung aufweisen kann, in den Kettentrieb 29 geleitet, welcher mit der Welle 25 in Wirkverbindung steht. Über die Welle 25, welche die obere Rolle 5 aufnimmt, wird die Drehbewegung auf die obere Rolle 5 geleitet und somit die Fortbewegung des Anrollers bewirkt. Die Welle 25 ist in den Lagern 37 in der oberen Rollenaufnahme gelagert. Über die erste Befestigungsschraube 38 der oberen Rollenaufnahme und der zweiten Befestigungsschraube 39 der oberen Rollenaufnahme wird die obere Rollenaufnahme 12 mit dem oberen Arm 1 verbunden. Zudem wird die obere Rollenaufnahme 12 über eine Einstell- und Fixierungsschraube 40 mit der Antriebsaufnahme 23 verbunden. Die untere Rolle 4 ist ballig gestaltet und über die Schraubenverbindung 30 und das Wellenstück 36 an der unteren Rollenaufnahme 13 gelagert. Im Bereich der unteren Rolle 4 befindet sich zudem die Hilfsrolle 23, welche ein Bewegen des Anrollers über die Arbeitsfläche erleichtert und somit auch eine gleichmäßigere Bewegung des Anrollers über die Verbindungsflächen ermöglicht. Die Hilfsrolle 32 ist über eine Schraubenverbindung 31 und die Welle 33 mit der unteren Rollenaufnahme 13 drehbar verbunden. Die untere Rollenaufnahme 13 ist über die erste Verbindungsschraube 34 und die zweite Verbindungschraube 35 mit dem unteren Arm 2 fixiert.

Die Presseinrichtung 7 mit der Druckschraube 8 ist an der Oberseite des Arms 1 dargestellt. Über die Schraubenaufnahme 27 wird die durch die Anpressung der Druckschraube 8 über den Druckschraubenkopf 28 auf die Druckschraubenaufnahme 9 erzeugte Presskraft der Presseinrichtung 7 in die Zugelemente 17 weitergeleitet. Die Zugelemente 17 sind dabei über eine Schraubenverbindung mit der Druckschraubenaufnahme 27 verbunden. Die Zugelemente 17 sind zudem mit dem Verbindungsstück 3 verbunden. Insbesondere wird über die Schraube 41 und die Abstandshülsen 43, welche an das untere Teil 42 des Verbindungsstücks 3 grenzen, der Kraftkreis geschlossen. Die Schraube 41 wird dabei durch eine Scheibe 44 geführt.

Der zweite Griff 11 wird über die zweite Griffbefestigung 21 am ersten Arm befestigt und lässt sich über die im ersten Arm vorgesehen Schienen des Arms individuell an den jeweiligen Benutzer und dessen Armlänge anpassen. In einer besonders vorteilhaften Ausführungsform ist die Griffbefestigung über Schrauben in die Schienen des Arms geschraubt, sodass bei Lockerung der Schrauben der Griff in einfacher Weise verstellt werden kann.

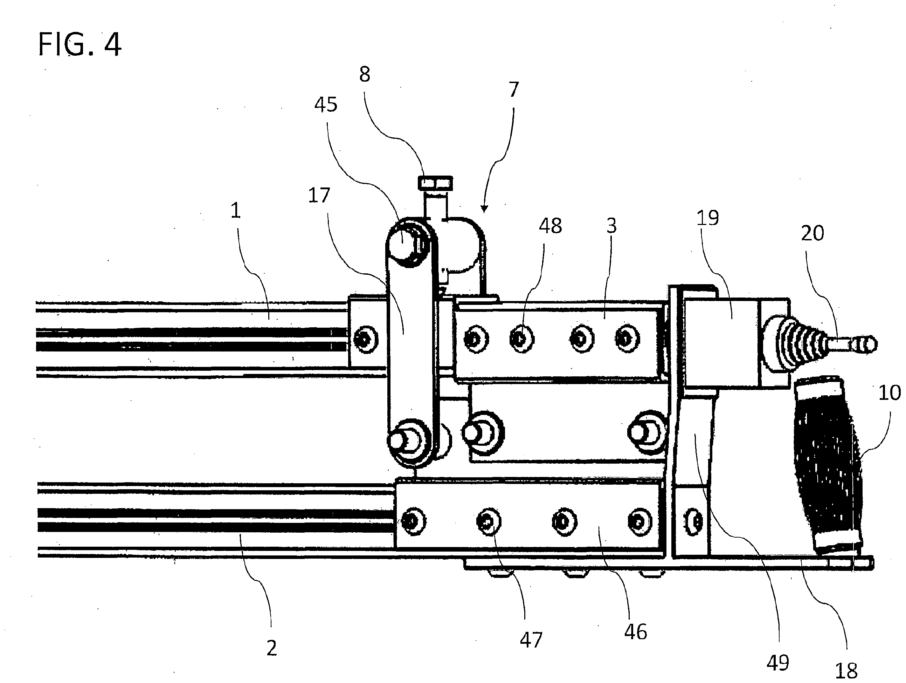

In Figur 4 sind die Presseinrichtung 7 und das Verbindungsstück 3 mit dem Eingabegerät 20 und der Steuerung 19 dargestellt.

Der erste Griff 10 weist dabei einen Neigungswinkel gegenüber der Griffbefestigung 18 auf. Der erste Griff 10 ist somit über die erste Griffbefestigung 18 an dem unteren Arm 2 befestigt. Die Neigung des ersten Griffs 10 erleichtert die Bedienbarkeit des Anrollers. Da sich das Eingabegerät 20 zudem im Bereich des ersten Griffs 10 befindet, ist es möglich, dass der Benutzer ohne große Armbewegungen mit der Hand am ersten Griff auch das Eingabegerät 20 und die Steuerung 19 bedienen kann. Durch die Verwendung des doppelwirkenden Anrollers mit elektrischem Antrieb lässtsich die Anpresskraft bspw. mit Hilfe eines Drehmomentschlüssels genau nach Vorgabe einstellen. Somit wird die gesamte Klebefläche mit einem optimalen Druck angerollt. Der Anroller wird mit Hilfe des elektrischen Antriebs mit einer optimalen und gleichmäßigen Geschwindigkeit über die Fläche bewegt, wodurch eine gute Haftung der Verklebeflächen erreicht wird. Der Anroller kann durch den elektrischen Antrieb zudem wieder gut in den Gurt hineingefahren werden, wenn dieser über den Vordergurtrand hinaus bewegt wird. Dies ist insbesondere möglich, wenn die obere Rolle bzw. die angetriebene Rolle eine aufgeraute Oberfläche oder ein Profil aufweist. Da der Benutzer des Anrollers den Anroller nahezu kraftlos über die Verbindung bewegen kann, kann er jede Stelle der Verbindung ohne großen Kraftaufwand gut anrollen, so dass die Güte der Verbindung erhöht werden kann. Zudem wird die Qualität der hergestellten Verbindung erhöht, da mit einem vordefinierten Druck über die gesamte Fläche angerollt wird.

## Patentansprüche

1. Tragbarer Anroller zur Druckerzeugung beim Kaltverbindungsprozess von Fördergurten auf Polymerbasis mit
zwei Armen (1, 2), die über ein Verbindungsstück (3) miteinander verbunden sind und jeweils ein Anrollteil (50) umfassen, wobei die Anrollteile (50) mit ihren Wirkungsflächen gegenüberliegend zueinander angeordnet sind, sowie einer auf die Arme (1, 2) drückende Presseinrichtung (7),
**wobei**
ein Anrollteil (50) für eine Fortbewegung des Anrollers über eine Verbindungsfläche der zu verbindenden Fördergurte über einen Antrieb (6) angetrieben werden kann, und
das angetriebene Anrollteil (50) eine beweglich an einem der Arme (1, 2) gelagerte angetriebene Rolle (5) ist, und
die Wirkungsfläche der angetriebenen Rolle (5) zur Erhöhung der Reibung als eine ein aufgerautes Oberflächenprofil aufweisende Lauffläche ausgebildet ist.

2. Tragbarer Anroller nach Anspruch 1, **wobei** die zu verbindenden Fördergute auf Polymerbasis, Gurte mit einer Deckschicht aus Kautschuk oder einem anderen elastomeren Material sind.

3. Tragbarer Anroller nach einem der Ansprüche 1 bis 2, **wobei** die Drehgeschwindigkeit der angetriebenen Rolle (5) über eine Steuerung (20) kontrolliert werden kann.

4. Tragbarer Anroller nach einem der Ansprüche 1 bis 3, **wobei** der Antrieb (6) als elektrischer Antrieb ausgebildet ist.

5. Tragbarer Anroller nach einem der Ansprüche 1 bis 4, **wobei** die Presseinrichtung (7) eine Druckanzeige und/oder einen Druckmesser umfasst.

6. Tragbarer Anroller nach Anspruch 3, **wobei** die Steuerung (20) einen Schalter zur Steuerung des angetriebenen Anrollteils (50) umfasst.

7. Tragbarer Anroller nach einem der Ansprüche 1 bis 6, **wobei** der Antrieb (6) über ein Getriebe (14) mit dem angetriebenen Anrollteil (50) in einer Wirkverbindung steht.

8. Tragbarer Anroller nach einem der Ansprüche 1 bis 7, **wobei** der Antrieb (6) als auch das angetriebene Anrollteil (50) im Bereich des freien Ende des Arms (1; 2) befestigt sind.

9. Tragbarer Anroller nach einem der Ansprüche 1 bis 8, **wobei** der Antrieb (6) ein Schrittmotor ist.

10. Tragbarer Anroller nach den Ansprüchen 3 und 4, der derart konfiguriert ist, dass durch Steuern der Drehgeschwindigkeit der angetriebenen Rolle (5) die Fortbewegung des Anrollers über die Verbindungsfläche eingestellt werden kann und der Anroller über einen Rand der Verbindungsfläche hinaus bewegbar ist und der Anroller auf die Verbindungsfläche zurück bewegbar ist.

11. Tragbarer Anroller nach einem der vorhergehenden Ansprüche, wobei der tragbare Anroller zwei Griffe (10, 11) zur Handhabung durch einen Benutzer aufweist.

12. Tragbarer Anroller nach den Ansprüchen 4 und 11, wobei der Anroller ein tragbares Werkzeug ist, welches von einem Benutzer über die Fördergurte bewegbar ist, sodass jede Stelle der Verbindung der zu verbindenden Fördergurte anrollbar ist.

## Claims

1. A portable stitcher for the pressure generation in a cold splicing process of polymer-based conveyor belts, comprising
two arms (1, 2) connected to each other through a connector (3), each comprising a stitching part (50), said stitching parts (50) arranged with their effective surfaces opposing each other, as well as a pressing device (7), pressing said arms (1, 2), wherein
a stitching part (50) for movement of said stitcher over a connection surface of said conveyor belts to be connected may be driven through a drive (6), and
the driven stitching part (560) is a driven reel (5) movably supported on one of said arms (1, 2), and
the effective surface of said driven reel (5) being formed as a running surface having a roughened surface profile for increasing friction.

2. The portable stitcher of claim 1, said polymer-based conveyor belts to be connected being belts with a cover layer from rubber or another elastomeric material.

3. The portable stitcher of one of the claims 1 to 2, the rotation rate of said driven reel (5) being controllable through a control (20).

4. The portable stitcher of one of the claims 1 to 3, said drive (6) being formed as an electric drive.

5. The portable stitcher of one of the claims 1 to 4, said pressing device (7) comprising a pressure indicator and/or a pressure gauge.

6. The portable stitcher of claim 3, said control (20) comprising a switch for controlling said driven stitching part (50).

7. The portable stitcher of one of the claims 1 to 6, said drive (6) being in operative connection with said driven stitching part (50) through a transmission (14).

8. The portable stitcher of one of the claims 1 to 7, said drive (6) as well as said driven stitching part (50) being mounted in the area of the free end of said arm (1; 2).

9. The portable stitcher of one of the claims 1 to 8, said drive (6) being a stepper motor.

10. The portable stitcher of the claims 3 and 4, being configured such that the movement of said stitcher over said connection surface may be set by controlling the rotation rate of said driven reel (5) and said stitcher is movable beyond an edge of said connection surface and said stitcher is movable back onto said connection surface.

11. The portable stitcher of one of the previous claims, said portable stitcher having two handles (10, 11) for being handled by a user.

12. The portable stitcher of the claims 4 and 11, said stitcher being a portable tool movable by a user over said conveyor belts such that every position of the connection of said conveyor belts to be connected is stitchable.

## Revendications

1. Rouleau portable pour générer une pression dans le processus de jonction à froid de courroies transporteuses à base de polymère, comportant
deux bras (1, 2) reliés l'un à l'autre par une pièce de liaison (3) et comprenant chacun une partie de roulement (50), les parties de roulement (50) étant disposées avec leurs surfaces actives tournées l'une vers l'autre, et un dispositif de pressage (7) appuyant sur les bras (1, 2),
dans lequel
une partie de roulement (50) peut être entraînée par un entraînement (6) pour faire avancer le rouleau sur une surface de jonction des courroies transporteuses à relier, et
la partie de roulement entraînée (50) est un galet entraîné (5) monté de manière mobile sur l'un des bras (1, 2), et
la surface active du galet entraîné (5) est réalisée sous forme de surface de roulement ayant un profil de surface rendu rugueux afin d'augmenter la friction.

2. Rouleau portable selon la revendication 1, dans lequel les courroies transporteuses à relier à base de polymère sont des courroies ayant une couche de couverture en caoutchouc ou en un autre matériau élastomère.

3. Rouleau portable selon l'une des revendications 1 à 2, dans lequel la vitesse de rotation du galet entraîné (5) peut être contrôlée par une commande (20).

4. Rouleau portable selon l'une des revendications 1 à 3, dans lequel l'entraînement (6) est réalisé sous forme d'entraînement électrique.

5. Rouleau portable selon l'une des revendications 1 à 4, dans lequel le dispositif de pressage (7) comprend un affichage de pression et/ou un manomètre.

6. Rouleau portable selon la revendication 3, dans lequel la commande (20) comprend un commutateur pour commander la partie de roulement entraînée (50).

7. Rouleau portable selon l'une des revendications 1 à 6, dans lequel l'entraînement (6) est en liaison active avec la partie de roulement entraînée (50) par un mécanisme (14).

8. Rouleau portable selon l'une des revendications 1 à 7, dans lequel l'entraînement (6) ainsi que la partie de roulement entraînée (50) sont fixés dans la zone de l'extrémité libre du bras (1 ; 2).

9. Rouleau portable selon l'une des revendications 1 à 8, dans lequel l'entraînement (6) est un moteur pas à pas.

10. Rouleau portable selon l'une des revendications 3 et 4, configuré de telle sorte que l'avancement du rouleau sur la surface de jonction peut être ajusté en commandant la vitesse de rotation du galet entraîné (5), et le rouleau peut être déplacé au-delà d'un bord de la surface de jonction, et le rouleau peut être déplacé en retour sur la surface de jonction.

11. Rouleau portable selon l'une des revendications précédentes, dans lequel le rouleau portable comprend deux poignées (10, 11) pour la manipulation par un utilisateur.

12. Rouleau portable selon les revendications 4 et 11, dans lequel le rouleau est un outil portable qui peut être déplacé sur les courroies transporteuses par un utilisateur, de sorte que tout emplacement de la jonction des courroies transporteuses à relier peut être passé au rouleau.
